# EUROPEAN PATENT SPECIFICATION

(11) **EP 1 815 135 B1**
(45) Date of publication and mention of the grant of the patent: **09.03.2011**
(21) Application number: 05797876.9
(22) Date of filing: 27.10.2005
(51) Int. Cl.: F03B 17/06

(54) **APPARATUS FOR UTILISING THE ENERGY PRESENT IN FLOWING WATER**
VORRICHTUNG ZUR NUTZUNG DER IN STRÖMENDEM WASSER VORHANDENEN ENERGIE
APPAREIL D'UTILISATION DE L'ENERGIE PRESENTE DANS L'EAU COURANTE

(30) Priority: 27.10.2004 NL 1027350
(43) Date of publication of application: 08.08.2007
(73) Proprietor: Entry Technology Holding B.V., 3911 CA Rhenen (NL)
(72) Inventor: VAN BERKEL, Jacob, NL-3911 CA Rhenen (NL)
(74) Representative: Wijnstra, Reinier
(86) International application number: PCT/NL2005/000768
(87) International publication number: WO 2006/046866

(56) References cited:
- WO-A-96/00848
- US-A- 4 062 192
- US-A- 4 255 066
- US-A- 5 913 636
- US-A1- 2004 163 384
- PATENT ABSTRACTS OF JAPAN vol. 007, no. 025 (M-190), 2 February 1983 (1983-02-02) & JP 57 181976 A (HIROSHI OCHIAI), 9 November 1982 (1982-11-09)
- J. VAN BERKEL: "Haalbaarheidsonderzoek Waterkrachtlens" 28 October 2004 (2004-10-28), NEO , XP002365247 the whole document

## Description

The invention relates to a hydroelectric power system and to a method for transforming energy from flowing water into a different form of energy.

A hydroelectric power system and a method for transforming energy from flowing water into a different form of energy are known in practice. Flowing water from a river is blocked by a dam. Then, the water is passed to a turbine with electricity generator where it generates electricity.

One drawback of the known system and the known method is that they are relatively unsuitable for rivers where only a low drop is available. To generate sufficient power with such a low drop, it is necessary for a relatively large quantity of water to be passed through the turbine, and the turbine in question has to be made correspondingly large. This is expensive compared to the amount of electricity which can be generated. Consequently, the generation of electricity from water power is not economic when there is only a low drop.

US-A-4255066 suggests concentration of sea waves and utilization thereof for power production.

The object of the present invention is to provide a hydroelectric power system and a method for transforming energy from flowing water in which these drawbacks are at least partially overcome or at least to create a usable alternative.

In particular, it is an object of the invention to provide a hydroelectric power system and a method for transforming energy from flowing water which can be used economically for rivers with a low drop.

According to the invention, this object is achieved by a hydroelectric power system according to claim 1 and by a method for transforming energy from flowing water according to claim 23.

Advantageous preferred embodiments are defined in the subclaims.

The hydroelectric power system according to the invention comprises at least one wave generator, a wave booster and a wave energy transformer. The at least one wave generator comprises a water passage and is designed to transform at least some of the potential and/or kinetic energy of flowing water into surface waves with wave energy. The wave booster is designed to increase the amplitude of the surface waves in some of the water with the aid of the wave energy at least in an area where waves are exploited. The wave energy transformer is provided in the area where the waves are exploited and comprises a drivable conversion element for converting at least some of the energy in the boosted surface waves into a different form of energy.

Increasing the amplitude of the surface waves produces a higher potential energy and pressure in these waves than in the water which was originally flowing. This has a first advantage that the efficiency of a wave energy transformer, such as for example a turbine to.which an electricity generator is coupled, will be higher.

A second advantage is that some of the water can flow away past the wave energy transformer, and consequently the latter only has to be suitable for smaller quantities of water than in a hydroelectric power system which does not use the invention. As a result, it is possible to make do with a smaller and therefore less expensive wave energy transformer.

In an advantageous embodiment, the wave booster comprises a frame in the form of an arc of a circle, on which the at least one wave generator is provided. In the case of a single wave generator, this may be an elongate wave generator which extends along at least a section of the frame in the form of an arc of a circle. In a variant, it is possible to provide a plurality of wave generators which are distributed over the frame in the form of an arc of a circle and synchronously generate surface waves. One advantage of this embodiment is that the wave booster ensures directly at the source, during the generation of the surface waves, that a wave pattern in the form of an arc of a circle is formed, which converges as a travelling wave towards the area where the waves are exploited. On account of the shape of this wave pattern which is generated, there is in principle no need for any further measures, and consequently this is a simple way of boosting the surface waves.

In one embodiment, the water passage is provided with a passage control device for changing the flow of water allowed to pass through. The term changing the flow allowed to pass through is to be understood, for example, as encompassing both altering the quantity of water and the outflow direction. Changes of this type are a reliable way of generating a wave pattern.

In a variant, the wave generator comprises a profiled-section part which is provided in or close to the water passage. An increased flow velocity of the water can be realized in the water passage. Positioning a profiled-section part therein disturbs the water, which leads to surface waves. This phenomenon is also known as vortex shedding. This form of wave generation is simple since it requires few components and in principle no moving components or active control.

The method for transforming energy from flowing water into a different form of energy according to the invention comprises the following steps:
generating surface waves with the aid of the kinetic and/or potential energy of the flowing water, by controlling the flowing water,
using the wave energy in the surface waves generated to increase the amplitude of some of the generated surface waves, and
transforming the wave energy in the surface waves with the increased amplitude into a different form of energy.

As a result of the method according to the invention, some of the flowing water reaches a higher energy level, at the expense of the.remaining part of the water, which higher energy level can be profitably converted into, for example, mechanical or electrical energy.

In one embodiment, the amplitude of the generated surface waves is increased by letting the generated surface waves converge. This form of wave boosting requires relatively few or limited infrastructure measures, making it a relatively inexpensive form.

In a variant, the amplitude of the generated surface waves is increased by generating a standing.wave. By in each case exciting the standing wave in its natural frequency, it is possible to produce a wave with sufficient potential energy and pressure to be able to transform energy efficiently. A standing wave of this type can be successfully generated in a limited space which can be restricted, with the result that the process itself, and the associated transformation of energy, can be successfully controlled.

The invention also relates to the use of a hydroelectric power system according to claim 33.

An embodiment of the invention will be explained in more detail with reference to the appended drawing, in which:
Fig. 1 shows a plan view of a hydroelectric power system according to the invention;
Fig. 2 shows a cross section on line II-II in Fig. 1;
Figs. 3 to 7 show various flow rate metering units;
Figs. 8 and 9 show a flow rate metering unit in the form of an expandable dam;
Fig. 10 shows wave generation by means of a gap in a dam;
Fig. 11 shows wave generation by means of a profiled-section part;
Figs. 12 and 13 show an overflow dam for generating waves;
Figs. 14 to 17 show wave generation by means of an inverted siphon;
Figs. 18 and 19 show an inverted siphon with active control;
Fig. 20 shows wave.boosting by the generation of converging waves;
Fig. 21 shows wave boosting by causing waves to converge by refraction;
Fig. 22 shows wave boosting by causing waves to converge with the aid of diffraction;
Figs. 23 and 24 show a wave chamber for generating a standing wave;
Figs. 25 and 26 show an alternative wave chamber for generating a standing wave;
Fig. 27 shows a wave energy transformer provided with an overflow basin;
Fig. 28 shows a wave energy transformer provided with an air chamber and turbine;
Fig. 29 shows a wave energy transformer in the form of a wave buoy;
Fig. 30 shows a wave energy transformer in the form of a turbine on a waterway bed;
Fig. 31 shows a free turbine on a waterway bed; and
Fig. 32 shows a turbine in a housing below a waterway bed.

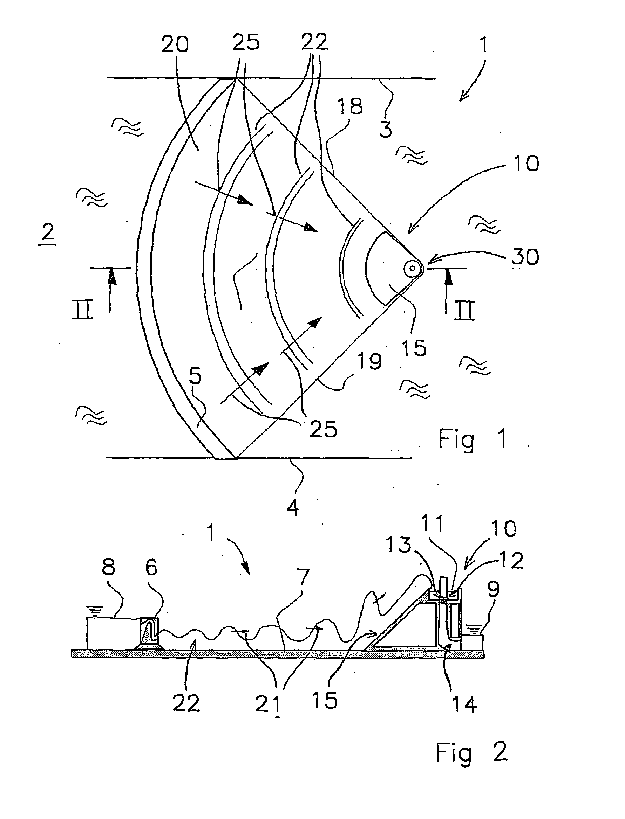

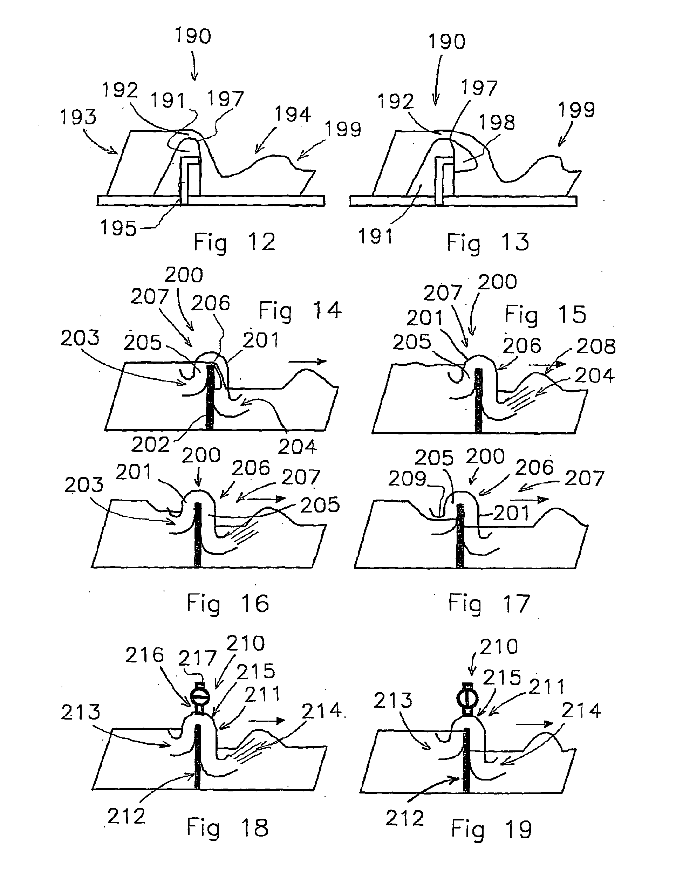

In Fig. 1, a hydroelectric power system according to the invention is denoted overall by reference numeral 1. This hydroelectric power system 1 is provided in a river 2 which is delimited by a left bank 3 and right bank 4 (as seen in the downstream direction). A frame in the form of an arc of a circle, in the form of a dam 5, is provided in the river 2. The dam 5 is provided with a plurality of wave generators 6, for example in the form of an inverted siphon, as diagrammatically indicated in Fig. 2 and discussed in more detail in connection with Figs. 14 - 17. The dam 5 is provided on a bed 7 of the river 2. The water level 8 upstream of the hydroelectric power system 1 is higher than the water level 9 downstream of the hydroelectric power system 1.

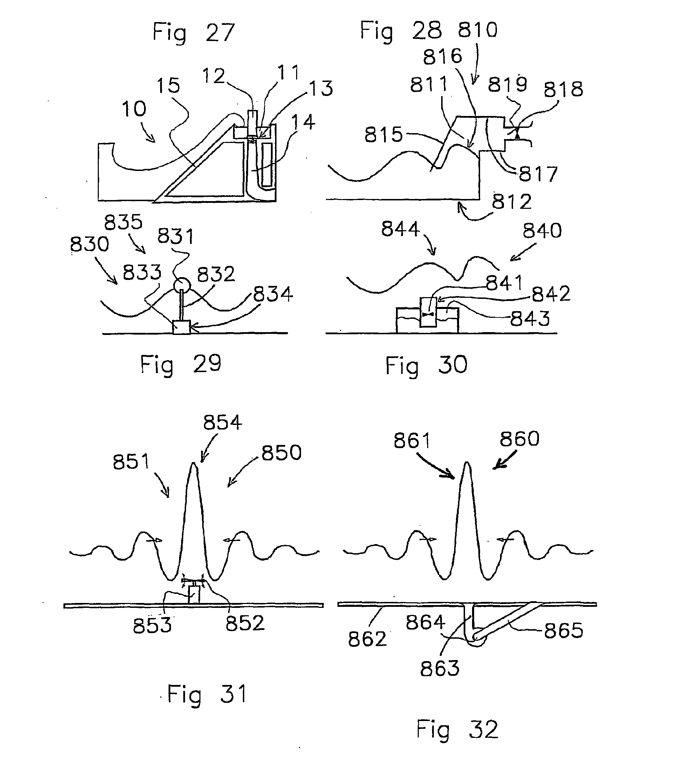

The hydroelectric power system 1 is also provided with a wave energy transformer 10 (cf. also Fig. 27). The wave energy transformer 10 comprises an overflow basin 11, a drivable conversion element in the form of a water-driven turbine 12. The water-driven turbine 12 is provided in a water feed 13, which is connected to an outflow opening in the bottom of the overflow basin 11. From the water-driven turbine 12, a water discharge 14 leads to the downstream part of the river 2. The wave energy transformer 10 is also provided with a sloping part 15. The hydroelectric power system 1 may also be provided with a first side wall 18 and a second side wall 19.

The dam 5 and the wave energy transformer 10, in this example together with the first and second side walls 18, 19, delimit a converging wave chamber 20. The overflow basin 11 can in this case be considered as a water discharge from the wave chamber 20.

In use, water from the river 2 will be blocked by the dam 5. The damming height, i.e. the difference between the first water level 8 and the second water level 9, is relatively low, for example about 1 metre. The wave generators 6 in the dam 5 generate travelling surface waves 22 in a way which will be explained in connection with the following figures. On account of the fact that the wave generators 6 generate the waves 22 synchronously along the dam 5, which is in the form of an arc of a circle, a wave pattern which is in the form of an arc of a circle is produced and propagates such that it converges in the direction of the arrows 25. The height of the waves 22 will increase as the waves 22 converge. Therefore, the wave chamber 20, by virtue of the circular shape of the dam 5, functions as a wave booster.

The optional side walls 18 and 19 in this case prevent wave energy from leaking away. However, these side walls 18 and 19 are not imperative, since the wave boosting is primarily a consequence of the waves 22 being generated in the form of an arc of a circle. In embodiments without side walls, the left and right banks 3, 4 can delimit the wave chamber 20.

The waves 22 converge towards an area 30 where the waves are exploited, which is located in or close to the imaginary centre point of the dam 5 in the shape of an arc of a circle. The wave energy transformer 10 is located in the area 30 where the waves are exploited. As they approach the wave energy transformer 10, the waves 22 run onto the slope 15, with kinetic energy being transformed into potential energy and the crests of the waves 22 entering the overflow basin 11. The level of the overflow basin 11 is higher than the original level 8 of the river 2, so that the water in the overflow basin 11 has a higher potential energy in relative terms than at the water level 8 upstream of the hydroelectric power system 1. This potential energy is converted via the water feed 13, the water-driven turbine 12 and the water discharge 14 into mechanical energy, which can then be transformed into electrical energy.

There are numerous possible wave generator 6 variants, which can be provided both as separate wave generators distributed over the width of the river 2 along a frame, or in the form of one elongate wave generator which is provided over substantially the entire length of a frame, i.e. substantially the entire width of the river 2.

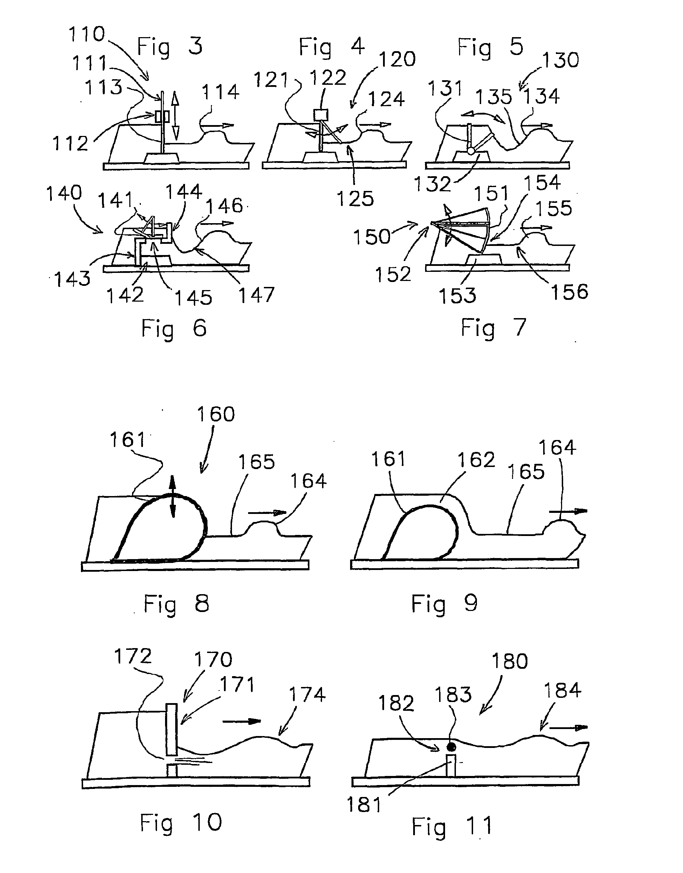

Figs. 3 - 9 show wave generators with actively controllable passage control devices which comprise a flow rate metering unit.

Fig. 3 shows a wave generator 110 which comprises a flow rate metering.unit in the form of a valve, in particular a vertically movable slide 111. The vertical slide 111 is provided displaceably in a vertical guide 112. Moving the vertical slide 111 upwards forms a water passage, in the form of a through-flow opening 113, through which a quantity of water can escape, generating a water wave 114. Subsequent closure of the vertical slide 111 produces a wave trough downstream of the slide 111, while the water is dammed upstream of the vertical slide 111.

Fig. 4 shows a wave generator 120 which comprises a flow rate metering unit in the form of a valve, in particular a horizontally pivotable partition 121. The partition 121 is pivotably connected to a frame 122 along a top edge. In a first, vertical, closed position, the partition 121 dams the river water. Pivoting away the partition 121 allows through a quantity of water, resulting in the formation of a wave crest 124. Closing the partition 121 again produces a wave trough 125 which follows the wave crest.

Fig. 5 shows a wave generator 130 which comprises a flow rate metering unit in the form of a valve, in particular a horizontally pivotable partition 131. A frame extends over the width of the river 2 in the form of an underwater dam 132. The partition 131 is connected to the underwater dam 132 by means of a pivoting connection. Pivoting it from a closed position to an open position and vice versa produces waves 134, 135.

Fig. 6 shows a wave generator 140 which comprises a flow rate metering unit in the form of a valve, in particular a pivotable valve 141, which is connected to a frame (not shown).. The wave generator 140 also comprises an underwater dam 142 on which a substantially L-shaped damming part 143 is provided. A second substantially L-shaped damming part 144, together with the first L-shaped damming part 143, forms an opening 145 which extends substantially horizontally and can be closed off by the pivotable valve 141. Opening and closing the valve 141 forms wave crests 146 and wave troughs 147.

Fig..7 shows a wave generator 150 with a flow rate metering unit in the form of a valve, in particular a pivotable valve 151. The hinge pivot 152 of the valve. 151 extends substantially in the horizontal direction, parallel to an underwater dam 153. The hinge 152 is connected, in a manner which is not shown, to, for example, the banks 3, 4 of the river 2 and/or the underwater dam 153. In a similar way to in Figures 3 - 6, a water passage 154 is alternately opened and closed, so as to form a wave crest 155 and wave trough 156.

Fig. 8 shows a wave generator 160 which comprises a flow rate metering unit in the form of an expandable dam 161. In an at least partially empty state of the expandable dam 161, as shown in Fig. 9, a water passage 162 is formed'above the expandable dam 161. In this state, river water flows through the passage 162, with a wave crest 164 being formed downstream of the dam 161. At least partially expanding the expandable dam 161 to an expanded state as shown in Fig. 8, in which the expandable dam 161 extends above the water level, closes the water passage 162 and produces a wave trough 165 downstream of the expandable dam 161.

Fig. 10 shows a wave generator 170 which comprises a dam 171 in which a split-shaped opening 172 is provided. The flow of water which emerges from the split-shaped opening 172, in combination with the free surface of the water, generates waves 174 downstream of the dam 171.

Fig. 11 likewise shows a wave generator 180 which acts on the basis of vortex shedding. An underwater dam 181 delimits a water passage 182 at its top side. A profiled-section part 183 is provided in.this water passage 182. Vortex shedding takes place downstream of this profiled-section part 183, resulting in the formation of waves 184. The profiled-section part 183 shown is provided in a fixed position. In an alternative embodiment, the profiled-section part 183 may oscillate or vibrate to promote the vortex shedding.

Fig. 12 shows a wave generator 190 with an overflow dam 191. At its top side, the overflow dam 191 delimits a water passage 192. The overflow dam 191 has a damming side 193 and a low side 194. The overflow dam 191 has an actively controllable outflow direction control unit which comprises a dam passage 195.

Fig. 13 shows a situation in which air is being supplied through the dam passage 195 to the low side of the overflow dam 191 or in which no passage of air is taking place..As a result of the supply of air and/or a sharp edge 197 which extends along the.top edge of the overflow dam .191, the flow of water which flows through the water passage 192 is released at the edge 197. An air pocket 198 is present between the low side of the overflow dam 191 and the water.

In the situation shown in Fig. 12, the air in the air pocket 198 is being sucked out via the dam passage 195. As a result of the occurrence of Coanda forces, the overflowing water will now be it contact with the low side 194 of the overflow dam 191. In this way, the outflow direction is controlled, and repeating the steps described over the course of time produces waves 199.

A preferred embodiment of a wave generator 20.0. is shown in Figs. 14 to 17. The wave generator 200 comprises a water passage 201 which is in the form of an inverted siphon and is provided on top of a frame, in this case a dam 202. An inflow.opening 203. is located on the damming side of the dam 202, while an outflow opening 204 is located on the low side. The water passage 201 delimits a through flow space 205. A high section 206 of the through-flow space 205 is located at a higher level than the inflow opening 203 and the outflow opening 204.

The water passage 201 forms an autonomously functioning passage control device 207 which operates as follows. In the situation shown in Fig. 14, there is air in the high section 206. As a result, the water passage 201 only allows a relatively small quantity of water to pass through it. However, the air which.is present is entrained by the flowing water, so that the water passage 201 will ultimately be completely filled with water. At that time, the passage capacity of the water passage 201 increases greatly, with the result that a large quantity of water flows through, forming a wave crest 208 downstream of the outflow opening 204.

On account of the large passage of water, the water level on the high side drops, i.e. at the location of the inflow opening 203, as shown in Fig. 16. When the water level locally drops to such an extent that it is below the top edge 209 of the inflow opening 203, air enters the water passage 201 again, with the result that, as will be clear from Fig. 17, the passage of water temporarily even stops altogether. Then, the water level locally rises again to the top of the dam 202, restoring the situation shown in Fig. 14. In an alternative which is not shown, air enters via a gas passage opening, in the form of an air channel and/or air port, which is provided above the top edge 209 of the inflow opening 203.

Fig. 18 and Fig. 19 show a wave generator 210. The wave generator 210, like that shown in Figs. 14 to 17, comprises a water passage 211 in the form of an inverted siphon. The water passage 211 is provided on a frame in the form of a dam 212 and has an inflow opening 213 and an outflow opening 214. Whereas in the previous figures the water passage 201 formed an autonomously functioning passage control device, the water passage. 211 is actively controllable. A gas passage opening 216 is provided in a.high section. 215 of the water passage 211. The gas passage leading to the gas passage opening 216 can be opened and closed by means of a gas valve 217. When the gas passage valve 217 is closed (Fig. 18), the water passage 211 is at its maximum through-flow capacity. Opening the gas valve 217 causes air to enter the high section 215 and stops the passage of water or at least reduces it (Fig. 19).

The wave generators as described in connection with Figures 3 to 19 are provided on or integrated with a frame, for example a dam, which extends across the width of the river 2. This frame may be in the form of an arc of a circle, as shown in.Fig. 1. If, in that case, the wave generator in question is a wave generator which extends over substantially the entire length of the frame, or if a plurality of wave generators are provided operating synchronously, for example as a result of a phase control device, the result will be the formation of a converging wave pattern in the form of an arc of a circle as described in connection with Fig. 1.

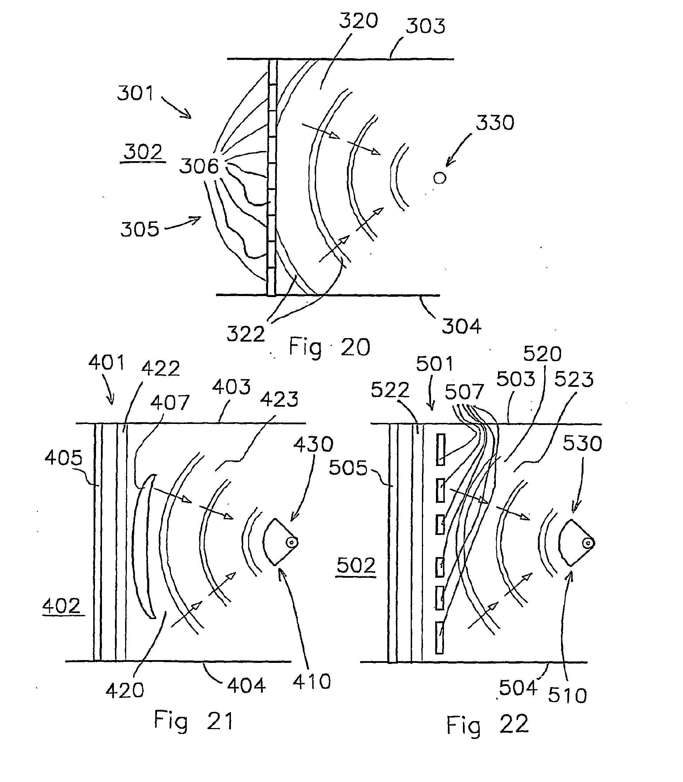

Alternative wave boosters, which like that shown in Fig. 1 are based on the convergence of the waves generated, are shown in Figs. 20 to 22.

Fig. 20 shows a hydroelectric power system 301 provided in a river 302 with banks 303 and 304. A straight, elongate frame in the form of a straight dam 305 extends from the left bank 303 to the right bank 304. A plurality of wave generators 306 are provided on the dam 305. A wave booster comprises a wave chamber 320,'.which is delimited by the straight dam 305, the banks 303 and 304 and a wave energy transformer (not shown). The wave booster also comprises a phase control device (not shown) which is connected to the plurality of wave generators, for matching the phases of the waves 322 formed by the wave generators 306. A phase control device of this type can match the phases of the wave boosters electrically, electronically, mechanically, hydraulically or in some other way.

A.phase shift during the generation of the waves 322 produces a converging wave pattern in the form of an arc of a circle, with the waves 322 converging towards an area .330 where the waves are exploited and where the wave energy transformer. (not shown) is provided.

Fig. 21 shows an embodiment of a hydroelectric power system 401 according to the invention, provided in a river .402 which is delimited by banks 403 and 404. A frame 405 with a wave generator is provided in the river. This may be one of the wave generators which has been described in connection with the previous figures. A beaker element 407 and a wave energy transformer 410 are provided in the river. The breaker element 407 is designed to change a direction of propagation of waves. In use, it is located substantially under water and forms part of a wave booster. The wave booster also comprises a wave chamber 420 which is delimited by the frame 405, the banks 403 and 404 and the wave energy transformer 410.

The wave generator 405 generates waves 422 which in the first instance propagate substantially in the same...direction as the direction of flow of the river 402. The waves 422 which reach the breaker element 407 are broken by refraction to form a converging wave pattern 423. As a result of the convergence, the wave height increases in the direction of the wave energy transformer 410, which is provided in an area 430 where the waves are exploited.

Fig. 22 shows an embodiment of a hydroelectric power system 501 according to the invention, provided in a river 502 which is delimited by banks 503 and 504. A frame 505 with a wave generator is provided in the river. This may be one of the wave generators which has been described in connection with the previous figures. A plurality of breaker elements 507 and a wave energy transformer 510 are provided in the river. A wave booster comprises the breaker elements 507 and a wave chamber 502, which is delimited by the frame 505, the banks 503 and 504, and the wave energy converter 510.

The breaker elements 507 extend from the bed of the river to above the water surface. Alternatively, they may also extend to close to the water surface. The breaker elements 507 extend substantially along an imaginary line which runs parallel to the frame 505, i.e. perpendicular to the direction of flows of the river 502. Alternatively, breaker elements may also extend in the direction of flow of the river. Openings are provided between the breaker elements 507. The shape, dimensions and distances between the breaker elements are adapted to the wave length of the waves generated in such a manner that wave diffraction occurs.. The breaker elements may take various cross-sectional shapes, including cylindrical, elliptical and rectangular. In a variant, the breaker elements may extend to below the water surface for a combination of refraction and diffraction.

The wave generator 505 generates waves 522 which in the first instance propagate substantially in the same direction as the direction of flow of the river 502. As a result of wave diffraction by the breaker elements 507, the waves 522 converge to form a converging pattern 523 which runs towards the.wave energy transformer 510 in an area 530 where.the waves are exploited.

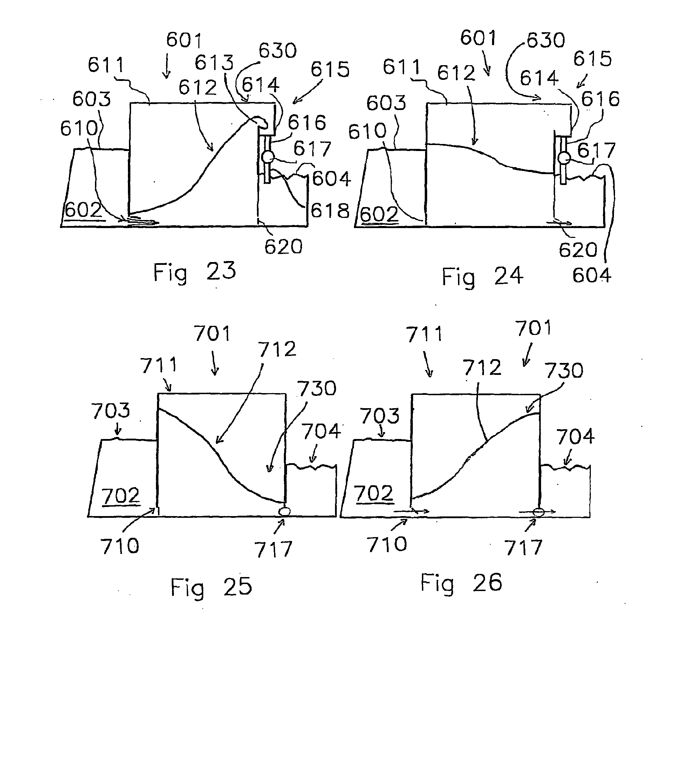

Figs. 23..and 24 show a hydroelectric power system 601 which is provided in a river 602 which at that location has a drop from the water- level 603 on the high side of the hydroelectric power system 601 to the water level 604 on the low side. The hydroelectric power system 601 comprises a wave generator, in the form of a. flow rate metering unit, in this case a valve 610. The hydroelectric power system 601 also comprises a wave chamber 611 which forms part of the wave booster. The wave chamber 611 is substantially rectangular and comprises substantially vertical walls. The valve 610 can be actuated in such a manner that a standing wave 612 can form in the wave chamber 611, and the standing wave is excited in its natural frequency by in each case metered admission of a quantity of river water.

A crest 613 of the standing wave 612 is in each case received in an overflow basin 614 which forms part of a wave energy transformer 615. A water feed 616, which connects the overflow basin 614 to a drivable conversion element in the form of a water-driven turbine 617, is provided at the bottom of the overflow basin 614. From the water-driven turbine 617, a water discharge leads to the low side of the river 602. A second valve 620 connects the wave chamber 611 to the low side of the river 602. This valve 620 is opened to discharge low-energy water from the wave chamber 611 to the low side of the river (cf. Fig. 24).

With the aid of the valve 610, a standing wave pattern is generated in the wave chamber 611, with the kinetic energy of the river 602 being transformed into kinetic and potential energy of the standing wave 612. In this case, in each case water with a relatively high potential energy of the wave crest 613 is taken off in an area. 630 where the waves are exploited, in order to be.utilized in the wave energy transformer 617. Water with low potential and kinetic energy is discharged via the valve 620.

Figs. 25 and 26 show an alternative hydroelectric power system 701 which is provided in a river 702. The hydroelectric power system comprises a wave generator in the form of a flow rate metering unit, which in this case comprises a valve 710. The hydroelectric power system 701 also comprises a wave booster in the form of a wave chamber 711. A water-driven turbine 717 is provided on the low side of the hydroelectric power system 711. The water-driven turbine is situated under water in the wave chamber, at the location of an area 730 were the waves are exploited. The area 730 where the waves are exploited is in this case one of the regions where the standing wave 712 is at substantially its maximum amplitude. The wave energy transformer also comprises regulating means (not shown) which ensure that the water-driven turbine 717 is only fed from the wave chamber 711 when the pressure in the area 730 where the waves are exploited is sufficiently higher than the low side of the river 702. When the pressure is only slightly greater, relatively low-energy water flows through or past the water-driven turbine 717 to be discharged to the lower side of the river 702. If the wave height in the area 730 where the waves are exploited is lower than the water level 704 on the low side of the river 702, no water, or at least less water than flows out, flows into or out of the wave chamber 711 (Fig. 25).

Fig. 27 shows the wave energy transformer 10, as described above in connection with Fig. 2, in detail. Figs. 28 - 32 show alternative wave transformers.

Fig. 28 shows a wave energy transformer 810 which comprises an air chamber 811 at the location of an area 812 where the waves are exploited. The air chamber 811 comprises a side wall 815 which, in use, extends to below the lowest level of the waves which are generated in the area 812 where the waves are exploited and forms a wave passage opening 816. The side wall 815 of the air chamber 811 adjoins a cylindrical wall 817. The air chamber 811 is also provided with an air passage opening 818 which leads to an air turbine 819. On its side remote from the air chamber 811, the air turbine 819 is in open communication with the outside air. Therefore, the air chamber 811 is connected to the environment at two positions: on its underside via the wave passage opening 816 to the waves in the area 812 where the waves are exploited, and via air turbine 819 to the outside air.

The alternating wave crests and wave troughs in the area 812 where.the waves are exploited reduce or increase, respectively, the space in the air chamber .811 which can be taken up by air. As a result, air is removed from or introduced into the air chamber 811 through the air passage opening 811. Since this air can only pass in and out via the turbine 819, the turbine 819 is driven and mechanical and/or electrical energy can be taken off at the turbine. In this exemplary embodiment, therefore, the air turbine 819 forms a drivable conversion element which is not driven directly, but rather indirectly by the waves.

Fig. 29 shows a wave energy transformer 830 which comprises a drivable conversion element in the form of a float or wave buoy 831. The wave buoy 831 is connected via.a drive element 832 to a generator 833 which is provided, for example, in a watertight housing 834 on the waterway bed of an area 835 where the waves are exploited.

Fig. 30 shows a wave energy transformer 840. The wave energy transformer 840 comprises a drivable conversion element in the form of a water-driven turbine 841. The water-driven turbine 841 is provided in a water conduit 842 which connects ah air chamber 843 to the water in an area 844 where the waves are exploited. The wave energy transformer 840 substantially utilizes the pressure changes which occur in the bottom of the waves in the area 844 where the waves are exploited. This pressure variation compresses the air in the air chamber 843 to a greater or lesser extent. This takes place as a result of the entry and exit of water through the water conduit 842, with the water-driven turbine 841 being driven.

Fig. 31 shows a wave energy transformer 850 which is provided under water in an area 851 where the waves are exploited. The wave energy transformer 850 comprises a freely disposed water-driven turbine 852 which is mechanically connected to a generator 853. The water-driven turbine 852 is driven by the vertical flow component which occurs in the boosted waves in an area 854 where the waves are exploited.

Fig. 32 shows a wave energy transformer 860 which is provided in an area 861 where the waves are exploited. In or close to a bed part 862 of the river at the location of the area 861 where the waves are exploited there is a wave water passage 863 which is connected to a drivable conversion element, in the form of a water-driven turbine 864..The water-driven turbine 864 is connected via a line 865 to a region of the river which lies outside the area 861 where the waves are exploited, where there are no waves or at most only relatively low waves

At the.location of the area 861 where the waves are exploited, high and low water pressures will occur alternately in the vicinity of the bed part 862. These alternating water pressures form.changing pressure .differences with respect to the water pressure outside the area 861 where the waves are exploited. These changing pressure differences translate into a flow of water through the lines .863 and 865, which drives the water-driven turbine 864.

The wave energy transformers described above are also novel and advantageous for the conversion of energy in a standing wave system, as such.

In addition to the embodiment shown, numerous variants are possible. For example, it is possible to provide alternative wave generators, for example a wave generator in the form of a.valve which is provided downstream in a wave chamber and can be periodically opened and closed to generate a standing wave in the wave chamber in question.

A frame on which one or more wave generators are provided may be integrated with a dam which dams the river at that position, as shown in the figures. Alternatively, the frame and the dam may also be separate from one another.

A dam on which one or more wave generators are provided does not have to extend over the entire width of a river. A dam of this type may advantageously be a groyne, i.e. a dam which extends from one bank of the river over only part of the width of the river. Groynes of this type are generally provided in a river for controlling the flow of water. For this purpose, there are numerous groynes located in succession along one or both banks. It is advantageously possible for wave generators to be provided on a plurality of these groynes. The wave boosting may take place in the space between the groynes, also known as the groyne field. The waves can be directed in such a way that the area where the waves are exploited is located at or close to the bank, which simplifies installation and maintenance of the wave energy transformer.

A passage control device which comprises an outflow direction control unit can also vary the outflow direction in the width direction of a river, whereas the example shown varies the outflow direction in the longitudinal direction of the river.

A water passage which forms part of a wave generator may be either a closed passage or a passage which is partially open to the environment, in particular to the air, as has already been demonstrated by the above examples with an overflow dam and with an underwater dam.

A wave chamber in which resonance occurs as part of a wave booster can take various cross-sectional shapes, when seen from above. For example, at least one wall may be convex or concave in form. It is'also possible for the entire chamber to be elliptical or round. A dumb-bell shape, with a relatively wide part at two ends connected by a narrower part, is also advantageous. This narrower part may if appropriate have convex walls.

A wave booster may comprise a reflector. A reflector of this type may be a curved wall which extends partially within and partially above the water at least around the water line. The wall may extend substantially above the waterway bed and/or be provided with through-flow openings four allowing flowing water to pass through. At the water line, the reflector is substantially closed, to reflect and thereby concentrate the surface waves generated. A reflector of this type can be used to generate the waves in a square-wave pattern, i.e. with parallel, straight wave crests. Alternatively, a reflector can also reflect a wave pattern which is already converging, thereby possibly increasing the extent of convergence.

A wave energy transformer may also comprise elements other than the turbines, wave buoy and generators shown. For example, direct generation of electricity using the flowing water is possible.

In the wave energy transformers with an air chamber, resonance may advantageously occur by exciting the air and the water column in a natural frequency.

Where the figures show the generation of waves in the downstream direction, it is also possible, to generate surface waves upstream of the wave generator..In fact, with various of the wave generators shown, in particular the wave generators which are based on flow rate metering, surface waves will be formed both upstream and downstream of the wave generator. The upstream waves can be boosted in one of the -manners described above instead of or in addition to the downstream waves being boosted. A wave energy, transformer is provided in an upstream area where the waves are exploited. If appropriate, a wave energy transformer may also be provided in a. downstream area where the waves are exploited.

It is advantageous to generate both upstream and downstream waves and for an upstream area where the waves are exploited to be provided at a location where the waves are in opposite phase to waves located in a downstream area where the waves are exploited. A line connects the two areas where the waves are exploited. A water-driven turbine may be accommodated in the line, as shown in Fig. 32.

Therefore, the invention provides a hydroelectric power system and a method for transforming energy from flowing water which can be used effectively and efficiently in rivers in which only a relatively low drop occurs. The invention achieves this by generating surface waves, boosting the waves generated and removing energy from the boosted waves.. This concept can be flushed out in a large number of ways.

## Claims

1. Hydroelectric power system, comprising at least one wave generator (6), a wave booster (20) and a wave energy transformer (10), in which system
the at least one wave generator (6) comprises a water passage (201) and is designed to transform at least some of the potential and/or kinetic energy of flowing water into surface waves (22) with wave energy,
the wave booster (20) is designed to increase the amplitude of the surface.waves (22) in part of the water with the aid of the wave energy at least in an area (30) where the waves are exploited, and
the wave energy transformer (10) is provided in the area (30) where the waves are exploited and comprises a drivable conversion element (12) for converting at least part of the energy in the boosted surface waves (22) into a different energy form.

2. Hydroelectric power system according to claim 1, in which the wave booster (20) comprises a frame (5) in the form of an arc of a circle, on which the at least one wave generator (6) is provided.

3. Hydroelectric power system according to claim 1 or 2, in which the water passage (201) is provided with a passage control device (207) for changing the flow of water allowed to pass through.

4. Hydroelectric power system according to claim 3, in which the passage control device (207) is autonomous.

5. Hydroelectric power system according to claim 3, in which the passage control device (111) is actively controllable.

6. Hydroelectric power system according to one of claims 3 - 5, in which the passage control device comprises a flow rate metering unit (111).

7. Hydroelectric power system according to one of claims 3 - 6, in which the passage control device comprises an outflow direction control unit (195).

8. Hydroelectric power system according to claim 7, in which the water passage (192) comprises an overflow dam (191) with a damming side (193) and a low side (194), and the outflow direction control unit comprises a dam passage (195) which opens out in the low side (194) of the overflow dam (191), for supplying and/or discharging a gas.

9. Hydroelectric power system according to one of the preceding claims, in which the water passage (201) delimits a through-flow space (205), provided with an inflow opening (203) and an outflow opening (204), the through-flow space (205) comprising a high section (206) which, in use, is completely at a higher level than the inflow and outflow openings (203, 204).

10. Hydroelectric power system according to claim 9, in which the water passage comprises a gas passage opening. (216) for supplying and/or discharging a gas.

11. Hydroelectric power system according to one of the preceding claims, in which the wave generator (180) comprises a profiled-section part (183) which is provided in or close to the water passage (182).

12. Hydroelectric power system according to one of the preceding claims, in which a plurality of wave generators (306) are provided, and the wave booster (305) comprises a phase control device which is connected to the plurality of wave generators (306) for matching the phases of the surface waves caused by the wave generators (306).

13. Hydroelectric power system according to one of the preceding claims, in which the wave booster comprises a wave chamber (20) into which the water passage (201) of the at least one wave generator (6, 200) opens out and which is also provided with a water discharge (11).

14. Hydroelectric power system according to claim 13, in which the wave chamber..(611) is substantially rectangular, in order, in combination with the at least one wave generator, to form a standing wave pattern (612).

15. Hydroelectric power system according to claim 13, in which the wave chamber (20) comprises two side walls (18, 19) which converge from the water passage to the water discharge (11).

16. Hydroelectric power system according to one of the preceding claims, in which the wave booster comprises at least one breaker element (407) for changing the direction of propagation of the surface waves (423).

17. Hydroelectric power system according to claim 16, in which the at least one breaker element (407), in use, is substantially under water, for refracting the surface waves generated by the wave generator (306).

18. Hydroelectric power system according to claim 16, in which a plurality of breaker elements: (507) are provided, which in use extend substantially as far as the water surface and are located substantially next to one another, to form wave passage openings which are such that wave diffraction can occur.

19. Hydroelectric power system according to one of the preceding claims, in which the drivable conversion element is a turbine (12), and the wave energy transformer (10) comprises an overflow basin (11) and a water feed (13), which overflow basin is intended: to collect the crests of the boosted surface waves in the area (30) where the waves are exploited, and which water feed (13) connects the overflow basin (11) to the turbine (12).

20. Hydroelectric power system according to one of the preceding claims, in which the drivable conversion element is a turbine (852) which is provided under water, in the area (851) where the waves are exploited.

21. Hydroelectric power system according to one of the preceding claims, in which the drivable conversion element is a float (831) which is located substantially at the water surface in the area (835) where the waves are exploited.

22. Hydroelectric power system according to one of the preceding claims, in which the drivable conversion element is a turbine (841) and the wave energy converter (840) also comprises an air chamber (843) which is connected to the area (844) where the waves are exploited.

23. Method for transforming energy from flowing water into a different form of energy, comprising the steps of:
generating surface waves with the aid of the kinetic and/or potential energy of the flowing water, by controlling the flowing water,
using the wave energy in the surface waves generated to increase the amplitude of some of the generated surface waves, and
transforming the wave energy in the surface waves with the increased amplitude into a different form of energy.

24. Method according to claim 23, in which controlling the flowing water comprises varying the flow rate over the course of time.

25. Method according to claim 23 or 24, in which controlling the flowing water comprises varying an outflow direction of the flowing water over the course of time.

26. Method according to one of claims 23 - 25, in which the controlling of the flowing water comprises the shedding of vortices.

27. Method according to one of claims 23 - 26, in which the step of increasing the amplitude of the surface waves comprises letting the surface waves which have been generated converge.

28. Method according to claim 27, in which the convergence is effected by generating surface waves in a pattern in the form of an arc of.a circle in the step of generating said surface waves.

29. Method according to one of claims 23 - 28, in which the step of increasing the.amplitude of the surface waves comprises creating a standing wave.

30. Method according to one of claims 23 - 29, in which in the step of transforming the wave energy, the potential energy in the surface waves with the increased amplitude is utilized.

31. Method according to one of claims 23 - 30, in which in the step of transforming the wave energy, the kinetic energy in the surface waves with the increased amplitude is utilized.

32. Method according to one of claims 23 - 31, in which in the step of transforming the wave energy, the pressure in the surface waves with the increased amplitude is utilized.

33. Use of a hydroelectric power system (1) according to one of claims 1 - 22 in a river (2).

## Patentansprüche

1. Wasserkraftsystem, welches mindestens einen Wellengenerator (6), einen Wellenverstärker (20) und einen Wellenenergie-Umsetzer (10) umfasst,
wobei der mindestens eine Wellengenerator (6) einen Wellendurchgang (201) umfasst und derart ausgestaltet ist, dass er zumindest einen Teil der potentiellen und/oder kinetischen Energie von fließendem Wasser in Oberflächenwellen (22) mit Wellenenergie transformiert,
wobei der Wellenverstärker (20) derart ausgestaltet ist, dass er die Amplitude der Oberflächenwellen (22) in einem Teil des Wassers mit Hilfe der Wellenenergie zumindest in einem Bereich (30), in welchem die Wellen ausgenutzt werden, erhöht, und
wobei der Wellenenergie-Umsetzer (10) in dem Bereich (30) vorhanden ist, in welchem die Wellen ausgenutzt werden, und ein antreibbares Umwandlungselement (12) umfasst, um zumindest einen Teil der Energie in den verstärkten Oberflächenwellen (22) in eine andere Energieform zu wandeln.

2. Wasserkraftsystem nach Anspruch 1, **dadurch gekennzeichnet, dass** der Wellenverstärker (20) einen Rahmen (5) in der Form eines Kreisbogens umfasst, auf welchem der mindestens eine Wellengenerator (6) vorhanden ist.

3. Wasserkraftsystem nach Anspruch 1 oder 2, **dadurch gekennzeichnet, dass** der Wasserdurchgang (201) mit einer Durchgangssteuerungsvorrichtung (207) versehen ist, um den Wasserstrom, welcher hindurchströmen kann, zu verändern.

4. Wasserkraftsystem nach Anspruch 3, **dadurch gekennzeichnet, dass** die Durchgangssteuerungsvorrichtung (207) selbststeuernd ist.

5. Wasserkraftsystem nach Anspruch 3, **dadurch gekennzeichnet, dass** das Durchgangssteuerungssystem (111) aktiv steuerbar ist.

6. Wasserkraftsystem nach einem der Ansprüche 3 - 5, **dadurch gekennzeichnet, dass** das Durchgangssteuerungssystem eine Flussratenmesseinheit (111) umfasst.

7. Wasserkraftsystem nach einem der Ansprüche 3 - 6, **dadurch gekennzeichnet, dass** das Durchgangssteuerungssystem eine Ausflussrichtungs-Steuerungseinheit (195) umfasst.

8. Wasserkraftsystem nach Anspruch 7, **dadurch gekennzeichnet, dass** der Wasserdurchgang (192) einen Überflussdamm (191) mit einer Dammseite (193) und einer niedrigen Seite (194) umfasst, und dass die Ausflussrichtungs-Steuereinheit einen Dammdurchgang (195) umfasst, welcher sich zu der niedrigen Seite (194) des Überflussdammes (191) öffnet, um ein Gas zuzuführen und/oder abzuführen.

9. Wasserkraftsystem nach einem der vorhergehenden Ansprüche, **dadurch gekennzeichnet, dass** der Wasserdurchgang (201) einen Durchflussraum (205) begrenzt, welcher mit einer Einflussöffnung (203) und einer Ausflussöffnung (204) versehen ist, wobei der Durchflussraum (205) einen hohen Abschnitt (206) umfasst, welcher sich im Betrieb vollständig auf einem höheren Niveau als die Einfluss- und Ausfluss-Öffnung (203, 204) befindet.

10. Wasserkraftsystem nach Anspruch 9, **dadurch gekennzeichnet, dass** der Wasserdurchgang eine Gasdurchgangsöffnung (216) umfasst, um ein Gas zuzuführen und/oder abzuführen.

11. Wasserkraftsystem nach einem der vorhergehenden Ansprüche, **dadurch gekennzeichnet, dass** der Wellengenerator (180) einen profilierten Abschnitt (183) umfasst, welcher in oder dicht bei dem Wasserdurchgang (182) vorhanden ist.

12. Wasserkraftsystem nach einem der vorhergehenden Ansprüche, **dadurch gekennzeichnet, dass** mehrere Wellengeneratoren (306) vorhanden sind und dass der Wellenverstärker (305) eine Phasensteuerungsvorrichtung umfasst, welche mit den mehreren Wellengeneratoren (306) verbunden ist, damit die Phasen der Oberflächenwellen, welche durch die Wellengeneratoren (306) verursacht werden, übereinstimmen.

13. Wasserkraftsystem nach einem der vorhergehenden Ansprüche, **dadurch gekennzeichnet, dass** der Wellenverstärker eine Wellenkammer (20) umfasst, in welche sich der Wasserdurchgang (201) des mindestens einen Wellengenerators (6, 200) öffnet und welche mit einem Wasserabfluss (11) versehen ist.

14. Wasserkraftsystem nach Anspruch 13, **dadurch gekennzeichnet, dass** die Wellenkammer (611) im Wesentlichen rechteckig ist, um in Kombination mit dem mindestens einen Wellengenerator ein stehendes Wellenmuster (612) auszubilden.

15. Wasserkraftsystem nach Anspruch 13, **dadurch gekennzeichnet, dass** die Wellenkammer (20) zwei Seitenwände (18, 19) umfasst, welche von dem Wasserdurchgang bis zu dem Wasserabfluss (11) konvergieren.

16. Wasserkraftsystem nach einem der vorhergehenden Ansprüche, **dadurch gekennzeichnet, dass** der Wellenverstärker mindestens ein Brechungselement (407) umfasst, um die Richtung einer Ausbreitung der Oberflächenwellen (423) zu ändern.

17. Wasserkraftsystem nach Anspruch 16, **dadurch gekennzeichnet, dass** sich das mindestens eine Brecherelement (407) im Betrieb im Wesentlichen unter Wasser befindet, um die Oberflächenwellen, welche durch den Wellengenerator (306) erzeugt werden, zu brechen.

18. Wasserkraftsystem nach Anspruch 16, **dadurch gekennzeichnet, dass** mehrere Brecherelemente (507) vorhanden sind, welche sich im Betrieb im Wesentlichen über der gesamten Wasseroberfläche erstrecken und im Wesentlichen nebeneinander angeordnet sind, um Wellendurchgangsöffnungen auszubilden, so dass eine Wellenbeugung auftreten kann.

19. Wasserkraftsystem nach einem der vorhergehenden Ansprüche, **dadurch gekennzeichnet, dass** das antreibbare Umwandlungselement eine Turbine (12) ist, und dass der Wellenenergie-Umsetzer (10) einen Überflussbehälter (11) und eine Wasserzuführung (13) umfasst, wobei der Überflussbehälter die Spitzen der verstärkten Oberflächenwellen in dem Bereich (30) aufsammeln soll, in welchem die Wellen ausgenutzt werden, und wobei die Wasserzuführung (13) den Überflussbehälter (11 ) mit der Turbine (12) verbindet.

20. Wasserkraftsystem nach einem der vorhergehenden Ansprüche, **dadurch gekennzeichnet, dass** das antreibbare Umwandlungselement eine Turbine (852) ist, welche unter Wasser in dem Bereich (851), in welchem die Wellen ausgenutzt werden, vorhanden ist.

21. Wasserkraftsystem nach einem der vorhergehenden Ansprüche, **dadurch gekennzeichnet, dass** das antreibbare Umwandlungselement ein Schwimmer (831) ist, welcher im Wesentlichen an der Wasseroberfläche in dem Bereich (835), in welchem die Wellen ausgenutzt werden, vorhanden ist.

22. Wasserkraftsystem nach einem der vorhergehenden Ansprüche, **dadurch gekennzeichnet, dass** das antreibbare Umwandlungselement eine Turbine (841) ist und dass der Wellenenergie-Umwandler (840) auch eine Luftkammer (843) umfasst, welche mit dem Bereich (844), in welchem die Wellen ausgenutzt werden, verbunden ist.

23. Verfahren zur Energieumsetzung von fließendem Wasser in eine andere Energieform, welches die Schritte umfasst:
Erzeugen von Oberflächenwellen mit Hilfe der kinetischen und/oder potentiellen Energie des fließenden Wassers, indem das fließende Wasser gesteuert wird,
Verwenden der Wellenenergie bei den erzeugten Oberflächenwellen, um die Amplitude einiger der erzeugten Oberflächenwellen zu erhöhen, und
Umsetzen der Wellenenergie in den Oberflächenwellen mit der erhöhten Amplitude in eine andere Energieform.

24. Verfahren nach Anspruch 23, **dadurch gekennzeichnet, dass** das Steuern des fließenden Wassers ein Verändern der Flussrate über der Zeit umfasst.

25. Verfahren nach Anspruch 23 oder 24, **dadurch gekennzeichnet, dass** das Steuern des fließenden Wassers ein Verändern einer Ausflussrichtung des fließenden Wassers über der Zeit umfasst.

26. Verfahren nach einem der Ansprüche 23 - 25, **dadurch gekennzeichnet, dass** das Steuern des fließenden Wassers ein Wirbelablösen umfasst.

27. Verfahren nach einem der Ansprüche 23 - 26, **dadurch gekennzeichnet, dass** der Schritt des Erhöhens der Amplitude der Oberflächenwellen ein Konvergieren-Lassen der Oberflächenwellen, welche erzeugt worden sind, umfasst.

28. Verfahren nach Anspruch 27, **dadurch gekennzeichnet, dass** die Konvergenz erzielt wird, indem Oberflächenwellen in einem Muster in der Form eines Kreisbogens in dem Schritt des Erzeugens der Oberflächenwellen erzeugt werden.

29. Verfahren nach einem der Ansprüche 23 - 28, **dadurch gekennzeichnet, dass** der Schritt des Erhöhens der Amplitude der Oberflächenwellen ein Erzeugen einer stehenden Welle umfasst.

30. Verfahren nach einem der Ansprüche 23 - 29, **dadurch gekennzeichnet, dass** in dem Schritt der Umsetzung der Wellenenergie die potentielle Energie in den Oberflächenwellen mit der erhöhten Amplitude eingesetzt wird.

31. Verfahren nach einem der Ansprüche 23 - 30, **dadurch gekennzeichnet, dass** in dem Schritt der Umsetzung der Wellenenergie die kinetische Energie in den Oberflächenwellen mit der erhöhten Amplitude eingesetzt wird.

32. Verfahren nach einem der Ansprüche 23 - 31, **dadurch gekennzeichnet, dass** in dem Schritt der Umsetzung der Wellenenergie der Druck in den Oberflächenwellen mit der erhöhten Amplitude eingesetzt wird.

33. Verwendung eines Wasserkraftsystems (1) nach einem der Ansprüche 1 - 22 in einem Fluss (2).

## Revendications

1. Système d'énergie hydroélectrique, comprenant au moins un générateur d'onde (6), un amplificateur d'onde (20) et un transformateur d'énergie d'onde (10), dans lequel système
ledit au moins un générateur d'onde (6) comprend un passage d'eau (201) et est conçu pour transformer au moins une partie de l'énergie potentielle et/ou cinétique de l'eau qui s'écoule en ondes de surface (22) avec une énergie d'onde,
l'amplificateur d'onde (20) est conçu pour augmenter l'amplitude des ondes de surface (22) dans une partie de l'eau à l'aide de l'énergie d'onde au moins dans une zone (30) où les ondes sont exploitées, et
le transformateur d'énergie d'onde (10) est prévu dans la zone (30) où les ondes sont exploitées et comprend un élément de conversion pouvant être entraîné (12) pour convertir au moins une partie de l'énergie dans les ondes de surface (22) amplifiées en une forme d'énergie différente.

2. Système d'énergie hydroélectrique selon la revendication 1, dans lequel l'amplificateur d'onde (20) comprend un cadre (5) sous la forme d'un arc d'un cercle, sur lequel ledit au moins un générateur d'onde (6) est prévu.

3. Système d'énergie hydroélectrique selon la revendication 1 ou 2, dans lequel le passage d'eau (201) est pourvu d'un dispositif de commande de passage (207) pour modifier l'écoulement d'eau autorisé à passer à travers celui-ci.

4. Système d'énergie hydroélectrique selon la revendication 3, dans lequel le dispositif de commande de passage (207) est autonome.

5. Système d'énergie hydroélectrique selon la revendication 3, dans lequel le dispositif de commande de passage (111) peut être commandé de manière active.

6. Système d'énergie hydroélectrique selon l'une des revendications 3 à 5, dans lequel le dispositif de commande de passage comprend une unité de mesure de débit (111).

7. Système d'énergie hydroélectrique selon l'une des revendications 3 à 6, dans lequel le dispositif de commande de passage comprend une unité de commande de direction d'écoulement de sortie (195).

8. Système d'énergie hydroélectrique selon la revendication 7, dans lequel le passage d'eau (192) comprend un barrage déversoir (191) avec un côté de retenue (193) et un côté bas (194), et l'unité de commande de direction d'écoulement de sortie comprend un passage de barrage (195) qui s'ouvre dans le côté bas (194) du barrage déversoir (191), pour fournir et/ou décharger un gaz.

9. Système d'énergie hydroélectrique selon l'une des revendications précédentes, dans lequel le passage d'eau (201) délimite un espace d'écoulement (205), pourvu d'une ouverture d'écoulement d'entrée (203) et d'une ouverture d'écoulement de sortie (204), l'espace d'écoulement (205) comprenant une section haute (206) qui, en utilisation, est complètement à un niveau plus élevé que les ouvertures d'écoulement d'entrée et d'écoulement de sortie (203, 204).

10. Système d'énergie hydroélectrique selon la revendication 9, dans lequel le passage d'eau comprend une ouverture de passage de gaz (216) pour fournir et/ou décharger un gaz.

11. Système d'énergie hydroélectrique selon l'une des revendications précédentes, dans lequel le générateur d'onde (180) comprend une partie de section profilée (183) qui est prévue dans le passage d'eau (182) ou à proximité de celui-ci.

12. Système d'énergie hydroélectrique selon l'une des revendications précédentes, dans lequel une pluralité de générateurs d'onde (306) sont prévus, et l'amplificateur d'onde (305) comprend un dispositif de commande de phase qui est connecté à la pluralité de générateurs d'onde (306) pour faire correspondre les phases des ondes de surface générées par les générateurs d'onde (306).

13. Système d'énergie hydroélectrique selon l'une des revendications précédentes, dans lequel l'amplificateur d'onde comprend une chambre d'onde (20) dans laquelle le passage d'eau (201) dudit au moins un générateur d'onde (6, 200) s'ouvre et qui est également pourvue d'une décharge d'eau (11).

14. Système d'énergie hydroélectrique selon la revendication 13, dans lequel la chambre d'onde (611) est sensiblement rectangulaire, afin de, en combinaison avec ledit au moins un générateur d'onde, former un motif d'onde stationnaire (612).

15. Système d'énergie hydroélectrique selon la revendication 13, dans lequel la chambre d'onde (20) comprend deux parois latérales (18, 19) qui convergent du passage d'eau vers la décharge d'eau (11).

16. Système d'énergie hydroélectrique selon l'une des revendications précédentes, dans lequel l'amplificateur d'onde comprend au moins un élément brisant (407) pour modifier la direction de propagation des ondes de surface (423).

17. Système d'énergie hydroélectrique selon la revendication 16, dans lequel ledit au moins un élément brisant (407), en utilisation, est sensiblement sous l'eau, pour réfracter les ondes de surface générées par le générateur d'onde (306).

18. Système d'énergie hydroélectrique selon la revendication 16, dans lequel une pluralité d'éléments brisants (507) sont prévus, qui, en utilisation, s'étendent sensiblement jusqu'à la surface de l'eau et sont situés sensiblement les uns à côté des autres, pour former des ouvertures de passage d'onde qui sont telles qu'une diffraction d'onde peut avoir lieu.

19. Système d'énergie hydroélectrique selon l'une des revendications précédentes, dans lequel l'élément de conversion pouvant être entraîné est une turbine (12), et le transformateur d'énergie d'onde (10) comprend un bassin de déversement (11) et une alimentation en eau (13), lequel bassin de déversement est destiné à collecter les crêtes des ondes de surface amplifiées dans la zone (30) où les ondes sont exploitées, et laquelle alimentation en eau (13) relie le bassin de déversement (11) à la turbine (12).

20. Système d'énergie hydroélectrique selon l'une des revendications précédentes, dans lequel l'élément de conversion pouvant être entraîné est une turbine (852) qui est prévue sous l'eau, dans la zone (851) où les ondes sont exploitées.

21. Système d'énergie hydroélectrique selon l'une des revendications précédentes, dans lequel l'élément de conversion pouvant être entraîné est un flotteur (831) qui est situé sensiblement à la surface de l'eau dans la zone (835) où les ondes sont exploitées.

22. Système d'énergie hydroélectrique selon l'une des revendications précédentes, dans lequel l'élément de conversion pouvant être entraîné est une turbine (841) et le convertisseur d'énergie d'onde (840) comprend également une chambre d'air (843) qui est reliée à la zone (844) où les ondes sont exploitées.

23. Procédé pour transformer l'énergie provenant d'une eau qui s'écoule en une forme d'énergie différente, comprenant les étapes consistant à :
générer des ondes de surface à l'aide de l'énergie cinétique et/ou potentielle de l'eau qui s'écoule, en commandant l'eau qui s'écoule,
utiliser l'énergie d'onde dans les ondes de surface générées pour augmenter l'amplitude de certaines des ondes de surface générées, et
transformer l'énergie d'onde dans les ondes de surface dont l'amplitude a été augmentée en une forme d'énergie différente.

24. Procédé selon la revendication 23, dans lequel la commande de l'eau qui s'écoule comprend la variation du débit au cours du temps.

25. Procédé selon la revendication 23 ou 24, dans lequel la commande de l'eau qui s'écoule comprend la variation d'une direction d'écoulement de sortie de l'eau qui s'écoule au cours du temps.

26. Procédé selon l'une des revendications 23 à 25, dans lequel la commande de l'eau qui s'écoule comprend le détachement des tourbillons.

27. Procédé selon l'une des revendications 23 à 26, dans lequel l'étape d'augmentation de l'amplitude des ondes de surface comprend le fait de laisser converger les ondes de surface qui ont été générées.

28. Procédé selon la revendication 27, dans lequel la convergence est effectuée en générant des ondes de surface en un motif sous la forme d'un arc d'un cercle à l'étape de génération desdites ondes de surface.

29. Procédé selon l'une des revendications 23 à 28, dans lequel l'étape d'augmentation de l'amplitude des ondes de surface comprend la création d'une onde stationnaire.

30. Procédé selon l'une des revendications 23 à 29, dans lequel, à l'étape de transformation de l'énergie d'onde, l'énergie potentielle dans les ondes de surface dont l'amplitude a été augmentée est utilisée.

31. Procédé selon l'une des revendications 23 à 30, dans lequel, à l'étape de transformation de l'énergie d'onde, l'énergie cinétique dans les ondes de surface dont l'amplitude a été augmentée est utilisée.

32. Procédé selon l'une des revendications 23 à 31, dans lequel, à l'étape de transformation de l'énergie d'onde, la pression dans les ondes de surface dont l'amplitude a été augmentée est utilisée.

33. Utilisation d'un système d'énergie hydroélectrique (1) selon l'une des revendications 1 à 22 dans une rivière (2).
